# EUROPÄISCHE PATENTSCHRIFT

(11) **EP 4 605 225 B1**
(45) Veröffentlichungstag und Bekanntmachung des Hinweises auf die Patenterteilung: **18.02.2026**
(21) Anmeldenummer: 23702754.5
(22) Anmeldetag: 24.01.2023
(51) Int. Cl.: B29C 64/118, C04B 35/00, B29C 71/02, B29C 71/00, B22F 10/64, B22F 10/40, B22F 10/18, B33Y 40/20, B33Y 10/00, B29C 64/40, B29C 64/371, B29C 64/30, C04B 35/52, C04B 35/56, C04B 35/573, C04B 38/00, C04B 41/00

(54) **VERFAHREN ZUM HERSTELLEN VON GRAPHITIERTEN FORMTEILEN MITTELS 3D-DRUCK**
METHOD FOR PRODUCING GRAPHITISED FORMED PARTS BY MEANS OF 3D PRINTING
PROCÉDÉ DE PRODUCTION DE PIÈCES FORMÉES GRAPHITISÉES PAR IMPRESSION 3D

(43) Veröffentlichungstag der Anmeldung: 27.08.2025
(73) Patentinhaber: Nippon Kornmeyer Carbon Group GmbH, 53578 Windhagen (DE)
(72) Erfinder: KLEIN, David, 53773 Hennef (Sieg) (DE); GERADS, Michael, 53119 Bonn (DE)
(74) Vertreter: Lippert Stachow Patentanwälte Rechtsanwälte Partnerschaft mbB
(86) Internationale Anmeldenummer: PCT/EP2023/051628
(87) Internationale Veröffentlichungsnummer: WO 2024/156335

(56) Entgegenhaltungen:
- WO-A1-2018/196965
- JP-A- S6 396 203
- US-A1- 2020 276 760

## Beschreibung

Die Erfindung betrifft ein Verfahren zum Herstellen von graphitierten Formteilen mittels 3D-Druck mit Filamenten aus einem aufschmelzbaren Kunststoff.

In der WO 2018/196965 A1 wird ein Verfahren zur Herstellung von keramischen Objekten mittels 3D-Druck beschrieben.

Dazu wird ein Carbon bzw. Graphit enthaltendes Precursor-Material mit einer anorganischen Komponente gemischt und durch eine thermische Behandlung mit einem 3D-Drucker wird ein keramisches Objekt hergestellt, das Carbid basiert ist. Die anorganische Komponente ist ein Metall, wie Silizium, Titan, Wolfram oder ein Metalloxid.

Das Precursor-Material enthält weiterhin Ruß oder Graphitpulver, sowie ein Polymer, wie Polyacrylnitril.

Das derart vorbereitete Precursor-Material wird durch 3D-Drucken, d.h. durch Schmelzschichten (Fused Deposition Modeling Technology) mit einem 3D-Drucker schichtweise zu dem gewünschten Objekt hergestellt.

Nach dem Drucken erfolgt ein Stabilisieren des Objektes an Luft bei einer Temperatur zwischen ca. 160 °C und ca. 250 °C, gefolgt von einem Carbonisierungsprozess bei einer Temperatur von 1.000 °C und 1.500 °C.

Weiterhin wird in der WO 01/98207 A1 eine verformbare Mixtur und deren Verwendung beschrieben.

Das verformbare Rohmaterial umfasst pulverisiertes Silizium sowie einen Kohlenstoff-Precursor mit einem in Wasser löslichen vernetzbaren sowie durch Wärme härtbaren Kunstharz und ein pulverisiertes Silizium-Füllmaterial, sowie ein in Wasser lösliches thermoplastisches Bindemittel.

Das Verfahren mit dem sich Honigwabenstrukturen herstellen lassen, umfasst das Mischen der Materialien zur Herstellung einer verformbaren Materialmischung und der nachfolgenden Ausformung eines Grünkörpers, was bevorzugt durch Extrusion, Trocknen und Härten des Grünkörpers erfolgt.

Anschließend wird der Grünkörper in einer StickstoffAtmosphäre bis zu einer Temperatur aufgeheizt, die ausreicht, um das Harz zu Carbonisieren und bei einer Temperatur, die ausreicht, um den Grünkörper in poröses Siliziumcarbid umzuwandeln, vorzugsweise bei über 1.400 °C, gesintert.

In der US 2020/276760 A1 wird ein additives Materialherstellungsverfahren zur Herstellung eines teilkristallinen Gegenstands unter Verwendung eines Extrusionsdruckverfahrens beschrieben. Das Verfahren umfasst die folgenden Schritte umfasst: (i) Extrusionsdruck einer thermoplastischen Polymerzusammensetzung, die ein statistisches PEKK-Copolymer und optional ein oder mehrere Additive umfasst, wobei das PEKK-Copolymer ein T:I-Verhältnis zwischen etwa 61:39 und 85:15 aufweist, um einen Artikel mit einer gewichtsprozentualen Kristallinität von 15 % oder weniger herzustellen.

Der Erfindung liegt die Aufgabe zugrunde, ein gegenüber dem Stand der Technik wesentlich vereinfachtes Verfahren zum Herstellen von graphitierten Formteilen, z.B. in Form einer Bienenwabenstruktur oder einer anderen dreidimensionalen Struktur aus einem thermoplastischen Kunststoff mittels 3D-Druck zur Verwendung als Träger für einen Katalysator, Filter o.ä., oder ein sonstiges Bauteil zu schaffen.

Die der Erfindung zugrundeliegende Aufgabe wird gelöst durch ein Verfahren mit den Merkmalen des Anspruchs 1, beispielsweise durch

Drucken einer 3D-Struktur mit einem 3D-Drucker unter Verwendung eines aufschmelz- und härtbaren Filamentes aus Kunststoff durch Aufschmelzen des Filamentes und schichtweises Auftragen bis die gewünschte Struktur erstellt ist,

Stabilisieren der aus dem Material des Filamentes bestehenden gedruckten 3D-Struktur durch eine Temperaturbehandlung zur chemischen oder kristallographischen Änderung des Kunststoffes indem
ein Vorstabilisieren der 3D-Struktur bei 150°C - ~180 °C über einen vorgegebenen Zeitraum vorgenommen wird, gefolgt
von einem Stabilisierungsschritt bei ~250 °C ± 20 °C, bis die 3D-Struktur ausreichend formstabil ist.

Anschließend wird die stabilisierte 3D-Struktur bei einer hohen Temperatur carbonisiert und schließlich graphitiert, was bei einer Temperatur von >1.800 °C, bevorzugt bei >2.000 °C erfolgt.

Es hat sich überraschend gezeigt, dass es möglich ist, einen 3D-Gegenstand, z. B. eine Bienenwabenstruktur, eine Figur o. dgl., durch Drucken mit einem 3D-Drucker unter Verwendung eines Kunststoff-Filamentes ohne jegliche weitere Beimischungen herzustellen und anschließend nach einer zweistufigen Stabilisierungsbehandlung durch eine Hochtemperatur-Behandlung unmittelbar in ein graphitiertes Formteil unter Beibehaltung der gedruckten Struktur umzuwandeln.

In einer ersten Fortbildung der Erfindung besteht das aufschmelzbare Filament aus einem thermoplastischen Kunststoff, wie ABS (Acrylnitril-Butadien-Styrol-Copolymer) oder PVA/BVOH (Polyvinylalkohol) oder auch BVOH (Butendiol-Vinylalkohol-Copolymerisat).

In einer weiteren Ausgestaltung der Erfindung erfolgt das Aufheizen der gedruckten 3D-Struktur auf die Temperatur zum Vorstabilisieren und zum Stabilisieren jeweils mit einer Heizrampe von 0,2 °C/min bis 1 °C/min.

Schließlich erfolgen das Vorstabilisieren und das Stabilisieren der gedruckten 3D-Struktur in Fortführung der Erfindung nach Erreichen der jeweils vorgegebenen Temperatur und konstant halten über mehrere Stunden bis mehrere Tage in Abhängigkeit von der Größe der 3D-Struktur, wobei eine Temperatur von 180 °C zum Vorstabilisieren im Interesse einer Beschleunigung dieses Vorganges bevorzugt wird.

Wichtig für das Stabilisieren ist, dass jeweils die höchst mögliche Temperatur an das gewählte Filamentmaterial angepasst wird, bei der kein Schmelzen oder keine starke Verformung eintritt, so dass das Stabilisieren insgesamt beschleunigt werden kann.

Weiterhin ist es von Vorteil, wenn die gedruckte 3D-Struktur während des Vorstabilisierens und des Stabilisierens zur Vermeidung von Verformungen, insbesondere bei großen Teilen, durch eine Stützvorrichtung stabilisiert wird.

Als eine Stützvorrichtung für die gedruckte 3D-Struktur kann vorteilhaft ein temperaturstabiles Material, wie Metall oder Graphit verwendet werden, wobei es auch möglich ist, ein nach diesem Verfahren hergestelltes Formteil als Stütze einzusetzen.

Alternativ kann die gedruckte 3D-Struktur in ein temperaturstabiles Pulver, wie Graphitstaub oder feinkörniges Speisesalz, als Stützvorrichtung gebettet werden.

Es versteht sich, dass das Graphitieren entweder unter Vakuum oder unter einem Inertgas, wie Argon, Krypton, Xenon oder auch Stickstoff, erfolgen muss, um ein Verbrennen Kohlenstoffs zu verhindern.

Um während des Graphitierens gleichzeitig einen Reinigungsprozess zur Beseitigung von Fremdelementen, wie Metallen, zu initiieren, kann ein Halogengas, wie Chlor, der Ofenatmosphäre zugeführt werden.

Eine weitere Fortführung der Erfindung besteht darin, die dreidimensionale Struktur nach dem Graphitieren mit einem pyrolytischen Kohlenstoff zu beschichten, um die Struktur abzudichten und als Träger für einen Katalysator verwenden zu können, stabiler zu machen, oder als Träger in Form eines Skelettes nutzen zu können, um beispielsweise durch geeignetes Beschichten des Skelettes (z.B. Wabenstruktur) dieses als Träger für einen Katalysator nutzen zu können.

Weiterhin kann die graphitierte Struktur mit Silizium-Karbid, Silizium-Nitrit oder Tantal-Karbid beschichtet oder in Silizium-Karbid oder Tantal-Karbid umgewandelt werden.

Die graphitierte 3D-Struktur kann auch mit Pech oder einem Harz imprägniert werden, um eine Verdichtung zu erreichen.

In einer besonderen Ausführungsform der Erfindung wird in einem ersten Schritt zunächst eine Stütze oder Stützstruktur, bzw. ein Gerüst auf einer geeigneten Unterlage gedruckt und stabilisiert und anschließend diese Stütze dann als Träger, Unterstützung oder Auflage für die im einem zweiten Schritt zu druckende 3D-Struktur verwendet.

Damit die gedruckte 3D-Struktur, die von der Stütze oder der Stützstruktur gestützt wird, leicht von dieser abgelöst bzw. abgenommen, oder entfernt werden kann, kann nach dem Drucken der Stütze bzw. der Stützstruktur ein Trennmittel auf diese zumindest in den Bereichen aufgetragen wird, die beim nachfolgenden Drucken der 3D-Struktur mit dieser in Kontakt kommen.

Alternativ können die Stütze oder die Stützstruktur auch gleichzeitig mit der 3D-Struktur gedruckt werden.

Beispielsweise können ein Tiegel oder ein Topf und eine Stützstruktur in Form einer Bienenwabenstruktur auf der Außen- und/oder Innenseite im Tiegel oder Topf gedruckt werden, so dass eine insgesamt stabilere Struktur entsteht. Die Stützstruktur kann zum Schluss nach dem Graphitieren mechanisch entfernt werden. Das kann durch Auskratzen des Tiegels oder des Topfes erfolgen.

Die Erfindung wird nachfolgend an einem Ausführungsbeispiel näher erläutert. In den zugehörigen Zeichnungsfiguren zeigen:
- Fig. 1:: eine schematische Darstellung eines 3D-Druckers;
- Fig. 2a:: eine dreidimensionale Struktur als Bienenwabenstruktur nach dem Drucken;
- Fig. 2b:: die dreidimensionale Struktur nach dem Stabilisieren;
- Fig. 2c:: die dreidimensionale Struktur nach dem Graphitieren;
- Fig. 3:: Beispiele für nach dem erfindungsgemäßen Verfahren gefertigte dreidimensionale Strukturen, z.B. als Träger für einen Katalysator bzw. einen Filter, ein Behälter und ein Konstruktionsteil (Würfel);
- Fig. 4:: eine typische Heiz-Kurve für das Vorstabilisieren und das Stabilisieren;
- Fig. 5:: ein weiteres Beispiel für eine 3D-Struktur in Form eines Frosches;
- Fig. 6a:: ein Tiegel oder Topf mit einer auf der Innenseite befindlichen filigranen Stützstruktur in Form einer Wabenstruktur nach dem Drucken und Stabilisieren; und
- Fig. 6b:: den Tiegel oder den Topf, bei dem die Stützstruktur nach dem Graphitieren mechanisch entfernt worden ist.

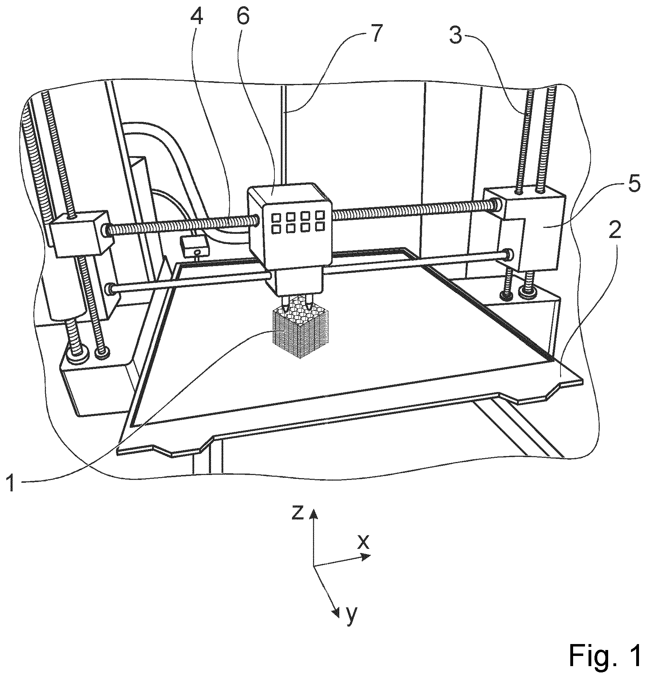

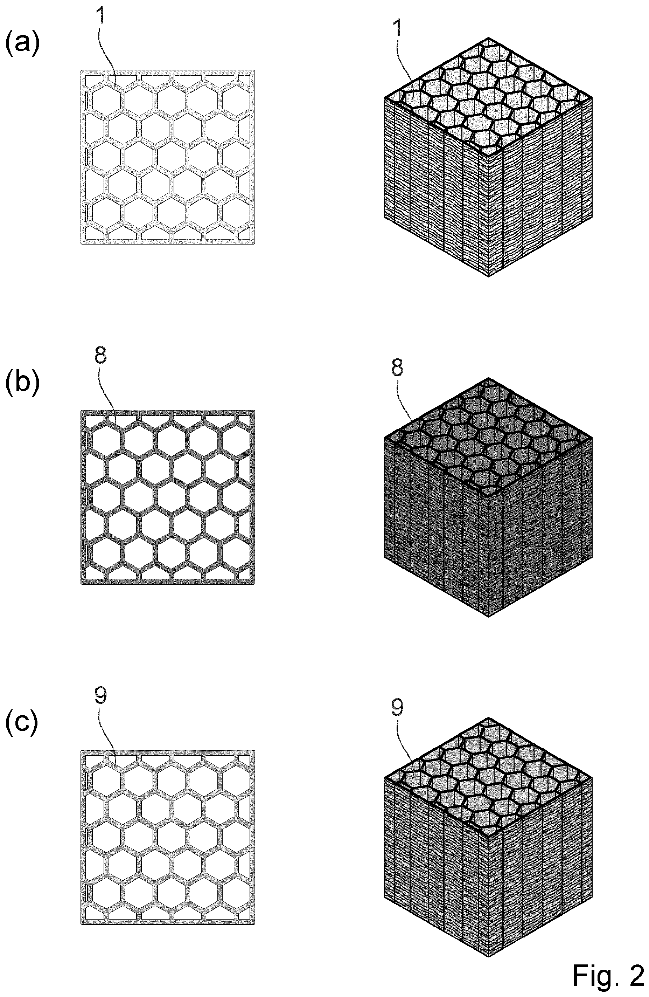

Für die Herstellung von Formteilen, z. B. in Form einer Bienenwabenstruktur (vgl. Fig. 2) oder einer anderen dreidimensionalen Struktur 1 aus einem aufschmelz- und härtbaren Kunststoff unter Verwendung eines Filamentes aus thermisch aufschmelzbarem Kunststoff sind übliche 3D-Drucker (Fig. 1) bestens geeignet. Als Filamente können kommerziell verfügbare Filamente verwendet werden.

Der 3D-Drucker besteht grundsätzlich aus einer Grundplatte 2 mit zueinander beabstandeten und senkrecht ausgerichteten und in Y-Richtung, d. h. nach vorn und hinten, verfahrbaren Gewindestützen 3, zwischen denen horizontale Gewindestangen 4 an den Gewindestützen 3 mittels Gewindehülsen 5 in Z-Richtung vertikal verfahrbar aufgehängt sind. Die Gewindestangen 4 tragen schließlich den in X-Richtung (Querrichtung) verfahrbaren eigentlichen 3D-Druckkopf 6 zum Drucken der 3D-Struktur 1 durch Schmelzschichten eines Filamentes 7, welches dem beheizbaren Druckkopf 6 zugeführt wird. Für die genaue X-, Y- und Z-Positionierung sorgen gewöhnlich entsprechend angesteuerte Schrittmotoren.

Mit einem derartigen relativ einfach aufgebauten 3D-Drucker lassen sich zusammen mit einer entsprechenden programmierbaren Steuerung beliebige 3D-Strukturen 1 realisieren. Beispiele für solche 3D-Strukturen gehen aus Fig. 2, 3 und 5 hervor.

Wenn auf diese Weise hergestellte 3D-Strukturen 1 jedoch nach dem Drucken graphitiert werden sollen, besteht das besondere Problem darin, dass der für das Drucken der 3D-Struktur 1 verwendete thermisch aufschmelzbare Kunststoff bei den für das Graphitieren erforderlichen hohen Temperaturen von bis über 2.000 °C erneut aufschmelzen oder zumindest außer Form geraten würde. Das bedeutet, dass sich das gewünschte Endprodukt, das schlussendlich nur noch aus einer Graphitstruktur besteht, so nicht herstellen lässt.

Hier setzt die Erfindung an, indem zunächst eine dreidimensionale Struktur 1 mit einem 3D-Drucker unter Verwendung des Filamentes 7 aus einem geeigneten Kunststoff durch Aufschmelzen desselben und schichtweisem Auftragen bis die gewünschte 3D-Struktur, z.B. eine Bienenwabenstruktur, ein Skelett, oder ein Gerüst, entstanden ist (Fig. 2a). Als Kunststoffmaterial für das Filament ist ABS (Acrylnitril-Butadien-Styrol-Copolymer), PVA/BVOH (Polyvinylalkohol) oder Butendiol-Vinylalkohol-Copolymerisat) besonders geeignet.

Auch geeignet ist TPU (thermoplastisches Polyurethan), allerdings mit einer höheren temperaturbedingten Verformung, ähnlich wie bei ABS.

Nachfolgend wird die gedruckte 3D-Struktur 1 durch eine spezielle Temperaturbehandlung stabilisiert, indem die chemische oder kristallographische Struktur des Kunststoffes geändert wird.

Dazu erfolgt ein Vorstabilisieren bei 150 °C bis ^{~}180 °C über einen längeren Zeitraum, bis die gedruckte 3D-Struktur 1 formstabil ist, gefolgt von einem Stabilisierungsschritt bei ^{~}250 °C ± 20 °C, bis die 3D-Struktur ausreichend formstabil ist, so dass sie ohne Schäden zu erleiden, transportiert oder anderweitig gehandhabt werden kann. Bevorzugt wird eine Temperatur von ^{~}180 °C zum Vorstabilisieren, weil bei dieser Temperatur das Stabilisieren beschleunigt wird, ohne dass ein Schmelzen eintritt.

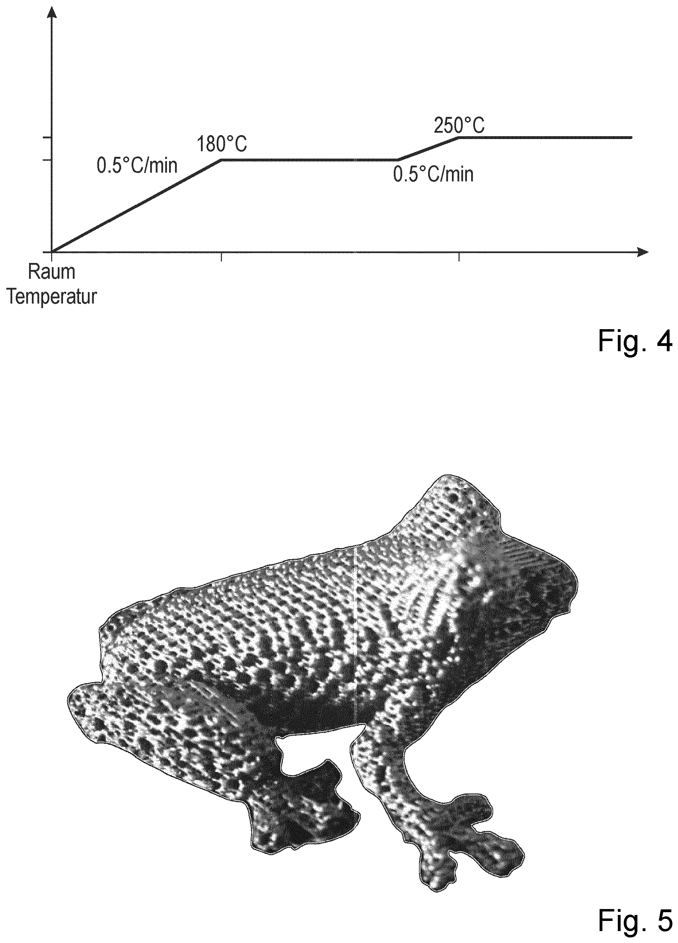

Fig. 4 zeigt den entsprechenden Temperaturverlauf für den vollständigen Stabilisierungsprozess, wobei das Aufheizen der 3D-Struktur auf die Temperatur zum Vorstabilisieren und zum Stabilisieren jeweils mit einer Heizrampe von 0,2 bis 1 °C/min, bevorzugt mit 0,5 °C/min erfolgt.

Das eigentliche Vorstabilisieren und das Stabilisieren der gedruckten 3D-Struktur 1 erfolgt in einem Langzeitprozess durch konstant halten der jeweiligen Temperatur über mehrere Stunden bis mehrere Tage in Abhängigkeit von der Größe der 3D-Struktur. Das Ergebnis dieses thermischen Prozesses ist eine stabilisierte 3D-Struktur 8, wie sie beispielhaft in Fig. 2 dargestellt ist.

Weiterhin ist es von Vorteil, wenn die 3D-Struktur 1 während des Vorstabilisierens und des Stabilisierens zur Vermeidung von Verformungen, zumindest an kritischen Stellen, durch Stützen stabilisiert wird. Diese Gefahr einer Verformung besteht insbesondere bei größeren gedruckten 3D-Strukturen 1.

Als eine mögliche Stütze für die 3D-Struktur kann vorteilhaft ein Gerüst aus einem temperaturstabilen Material, wie Metall oder Graphit verwendet werden, welches die gedruckte 3D-Struktur 1 an mehreren geeigneten Stellen, beispielsweise an der Außen-, Unterseite, oder Innenseite stützt. Als Stütze kann auch ein nach diesem Verfahren hergestelltes Gerüst eingesetzt werden.

Es besteht die Möglichkeit, in einem ersten Schritt zunächst eine Stütze oder Stützstruktur, bzw. ein Gerüst beispielsweise nach dem beschriebenen Verfahren auf einer geeigneten Unterlage zu drucken und diese Stütze dann als Träger, Unterstützung oder Auflage für die im zweiten Schritt zu druckende 3D-Struktur zu verwenden.

Die Stütze bzw. Stützstruktur kann auch mit höherer oder niedrigerer Dichte gedruckt werden als die 3D-Struktur 1, zumindest sollte die Stütze oder Stützstruktur eine ausreichende mechanische Festigkeit aufweisen, wie das beispielsweise bei einer Waben- oder Bienenwabenstruktur o.dgl. der Fall ist.

Darüber hinaus muss entweder sichergestellt werden, dass sich das zum Drucken der Stütze verwendete Material nicht mit dem zum Drucken des für die 3D-Struktur verwendeten Materials verbinden bzw. verkleben kann, um die 3D-Struktur nach dem Stabilisieren leicht von der Stütze bzw. Stützstruktur abnehmen zu können, oder die Stütze oder Stützstruktur hat eine ausreichend niedrige Dichte, wie eine Waben- oder Bienenwabenstruktur, so dass sie mechanisch leicht von der 3D-Struktur entfernt werden kann, ohne diese zu beschädigen.

Es ist auch möglich, nach dem Drucken der Stütze bzw. der Stützstruktur ein Trennmittel auf diese zumindest in den Bereichen aufgetragen werden, die beim nachfolgenden Drucken der 3D-Struktur mit dieser in Kontakt kommen können.

Weiterhin können die Stütze oder die Stützstruktur, z. B. als filigrane Wabenstruktur und die 3D-Struktur auch gleichzeitig gedruckt werden. Die filigrane Wabenstruktur hat den Vorteil einer besonders hohen Stabilität, lässt sich aber nach dem Graphitieren mechanisch leicht entfernen, ohne dass die 3D-Struktur beschädigt wird.

In einer anderen Alternative kann die gedruckte 3D-Struktur 1 in ein temperaturstabiles Pulver, wie Graphitstaub oder feinkörniges Speisesalz, als Stütze gebettet werden.

Von Nachteil ist hier die schlechtere Wärmeleitung des Pulvers, was durch die ohnehin lange Stabilisierungszeit wieder ausgeglichen wird.

Nachdem die Stabilisierung abgeschlossen ist, wird die stabilisierte 3D-Struktur 8 (Fig. 2(b)) bei einer hohen Temperatur in einem geeigneten Ofen bei hoher Formstabilität unter Luftabschluss graphitiert, was bei einer Temperatur von >1.800 °C, bevorzugt bei >2.000 °C, erfolgt. Bei diesem Prozess erfolgt zunächst ein Carbonisieren der stabilisierten 3D-Struktur, d.h. eine Umwandlung des Kunststoffes in eine Kohlenstoff enthaltende Struktur bzw. eine amorphe Kohlenstoffstruktur, die schlussendlich in Graphit umgewandelt wird.

Es versteht sich, dass das Graphitieren der stabilisierten 3D-Struktur 8 in einem hierfür geeigneten Ofen entweder unter Vakuum oder einem Inertgas, wie Argon, Krypton, Xenon oder auch Stickstoff, erfolgen muss, um oxidative Schäden zu vermeiden. Das Ergebnis ist eine graphitierte 3D-Struktur 9 (Fig. 2(C)).

Um während des Graphitierens gleichzeitig einen Reinigungsprozess zur Beseitigung von Fremdelementen, wie Metallen, aus der graphitierten 3D-Struktur 9 zu initiieren, kann zusätzlich ein Halogengas, wie Chlor, der Ofenatmosphäre zugeführt werden.

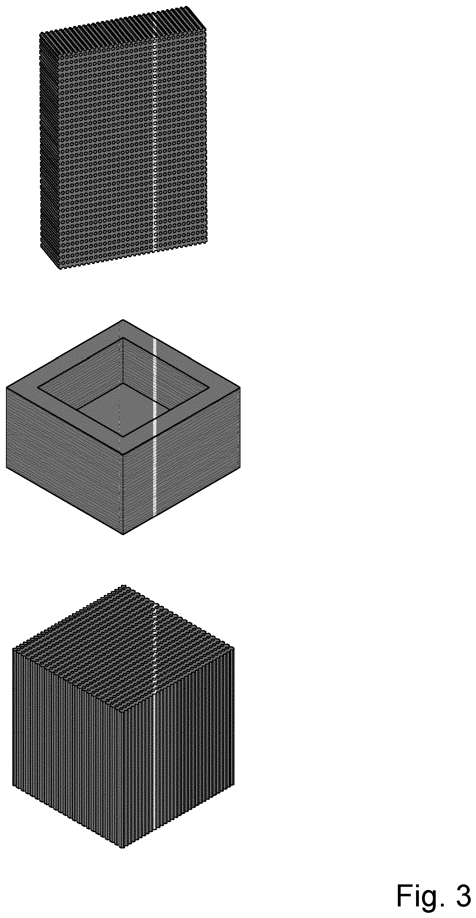

Ein Beispiel für eine graphitierte 3D-Struktur 9 in Form einer Bienenwabenstruktur ist in Fig. 2c dargestellt. Die Bienenwabenstruktur hat eine vergleichsweise hohe mechanische Stabilität und enthält besonders wenig Material, wobei nach dem erfindungsgemäßen Verfahren selbstverständlich auch beliebig andere 3D-Strukturen hergestellt werden können, vgl. Fig. 3 oder Fig. 5, in der als Beispiel ein mit dem erfindungsgemäßen Verfahren hergestellter Frosch abgebildet ist.

Es ist auch möglich, die graphitierte 3D-Struktur 9 nach dem Graphitieren mit einem pyrolytischen Kohlenstoff zu beschichten, um die Struktur abzudichten, stabiler zu machen, oder als Träger in Form eines Skelettes nutzen zu können.

Alternative Beschichtungen sind auch möglich mit SiliziumCarbid (SiC), Silizium-Nitrid, oder Tantal-Karbid, oder es ist auch möglich, die graphitierte 3D-Struktur in Silizium-Karbid oder Tantal-Karbid umzuwandeln, indem die 3D-Strukturen im Ofen Gasen der genannten Materialien, z. B. SiO oder Ta₂O₅) ausgesetzt werden.

Weiterhin kann die graphitierte dreidimensionale Struktur 9 mit Pech oder einem Harz imprägniert werden, um eine Verdichtung, z. B. für Filterungszwecke, zu erreichen.

Da das Beschichten und auch das Imprägnieren bei hohen Temperaturen vorgenommen werden, muss die 3D-Struktur vorher zumindest stabilisiert worden sein.

Aus Fig. 3 sind einige Anwendungsbeispiele für nach dem erfindungsgemäßen Verfahren gefertigte 3D-Strukturen, wie beispielsweise als Träger für einen Katalysator bzw. ein Filter (oben), ein Behälter (Mitte) und ein Konstruktionsteil, z. B. ein Würfel (unten), ersichtlich.

Für die Verwendung der graphitierten 3D-Struktur 9 als Träger für einen Katalysator ist es lediglich erforderlich, diese in einer geeigneten Beschichtungsvorrichtung mit den für die Katalysatorfunktion erforderlichen Materialien zu beschichten. Hierfür eignen sich die bekannten Beschichtungsverfahren wie CVD (Chemical Vapor Deposition), PVD (Physical Vapor Deposition), PECVD (Plasma Enhanced Chemical Vapor Deposition) o. dgl.

Alternativ kann auch eine nasschemische Beschichtung der graphitierten 3D-Struktur mit einem Sol-Gel Verfahren erfolgen, um diese als Katalysator einsetzen zu können.

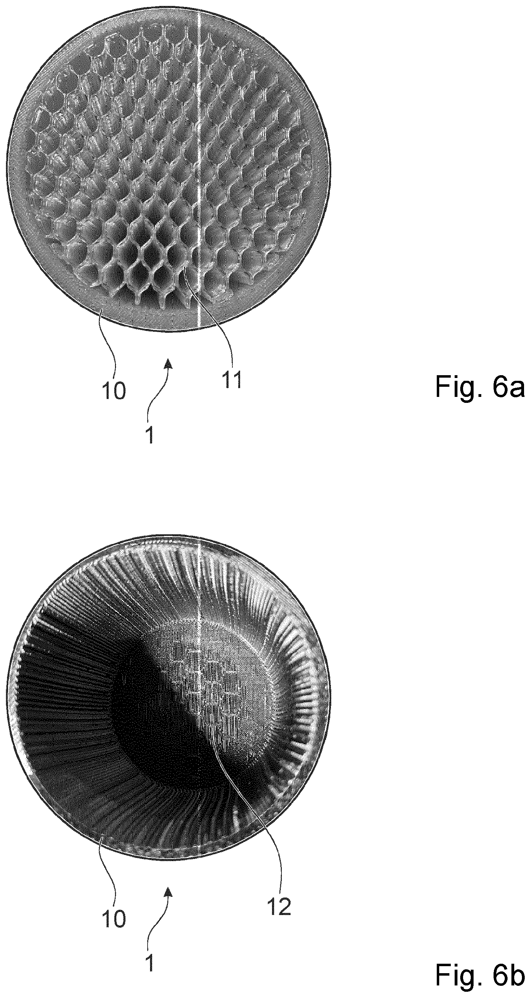

Fig. 6a zeigt ein Beispiel für eine 3D-Struktur 1 in Form eines Tiegels oder eines Topfes 10 und eine innere Stützstruktur 11 in Form einer Bienenwabenstruktur im Tiegel oder Topf, die gleichzeitig mit dem Tiegel oder Topf gedruckt worden sind (Fig. 6a). Es versteht sich, dass die 3D-Struktur auch eine andere Form haben kann.

Die filigrane Stützstruktur 11 lässt sich nach dem Graphitieren leicht mechanisch entfernen. Das kann durch Auskratzen des Tiegels oder des Topfes 10 erfolgen.

Fig. 6b zeigt den Tiegel oder den Topf 10, bei dem die Stützstruktur 11 nach dem Graphitieren entfernt worden ist. Spuren 12 der entfernten Stütze sind auf dem Innenboden des Tiegels oder des Topfes 10 sichtbar.

### Bezugszeichenliste

- 1: gedruckte 3D-Struktur
- 2: Grundplatte
- 3: Gewindestütze
- 4: Gewindestange
- 5: Gewindehülse
- 6: Druckkopf
- 7: Filament
- 8: stabilisierte 3D-Struktur
- 9: graphitierte 3D-Struktur
- 10: Tiegel oder Topf
- 11: Stützstruktur
- 12: Spuren der entfernten Stütze

## Patentansprüche

1. Verfahren zum Herstellen von graphitierten Formteilen mittels 3D-Druck von Filamenten aus einem Kunststoff,
durch Aufschmelzen eines Filamentes (7) aus einem aufschmelzbaren und härtbaren Kunststoff und schichtweises Auftragen mit dem 3D-Drucker bis die gewünschte Struktur erstellt ist,
Stabilisieren der aus dem Material des Filamentes (7) gedruckten 3D-Struktur (1) durch eine Temperaturbehandlung zur chemischen oder kristallographischen Änderung des Kunststoffes, indem
ein Vorstabilisieren bei 150 °C bis ^{~}180 °C über einen längeren Zeitraum vorgenommen wird, gefolgt
von einem Stabilisierungsschritt bei ^{~}250 °C ± 20 °C bis die gedruckte 3D-Struktur (1) ausreichend formstabil ist, und Graphitieren der stabilisierten 3D-Struktur mit oder ohne einer Stützstruktur bei einer Temperatur von >1.800 °C, bevorzugt bei >2.000 °C.

2. Verfahren nach Anspruch 1, **dadurch gekennzeichnet, dass** als aufschmelzbare Filament (7) ein ABS-Kunststoff (Acrylnitril-Butadien-Styrol-Copolymer), PVA/BVOH (Polyvinylakohol) oder TPU (thermoplastisches Polyurethan) verwendet wird.

3. Verfahren nach Anspruch 1 oder 2, **dadurch gekennzeichnet, dass** das Aufheizen der 3D-Struktur (1) auf die Temperatur zum Vorstabilisieren und zum Stabilisieren jeweils mit einer Heizrampe von 0,2 - 1,0 °C/min erfolgt.

4. Verfahren nach einem der Ansprüch 1 bis 3, **dadurch gekennzeichnet, dass** die gedruckte 3D-Struktur (1) während des Vorstabilisierens und des Stabilisierens zur Vermeidung von Verformungen, insbesondere bei großen Teilen, durch eine Stützvorrichtung stabilisiert wird.

5. Verfahren nach Anspruch 4, **dadurch gekennzeichnet, dass** als eine Stützvorrichtung für die gedruckte 3D-Struktur (1) ein temperaturstabiles Material, wie Metall oder Graphit, verwendet wird.

6. Verfahren nach Anspruch 4, **dadurch gekennzeichnet, dass** die gedruckte 3D-Struktur (1) in ein temperaturstabiles Pulver, beispielsweise Graphitstaub oder feinkörniges Speisesalz, eingebettet wird.

7. Verfahren nach einem der Ansprüche 1 bis 6, **dadurch gekennzeichnet, dass** das Graphitieren entweder unter Vakuum, oder einem Inertgas, wie Argon, Krypton, Xenon oder auch Stickstoff, erfolgt.

8. Verfahren nach einem der Ansprüche 1 bis 7, **dadurch gekennzeichnet, dass** der Ofenatmosphäre während des Graphitierens der stabilisierten 3D-Struktur (8) ein Halogengas, wie Chlor, zugeführt wird.

9. Verfahren nach einem der Ansprüche 1 bis 8, **dadurch gekennzeichnet, dass** die graphitierte 3D-Struktur (9) mit einem pyrolytischen Kohlenstoff beschichtet wird.

10. Verfahren nach einem der Ansprüche 1 bis 8, **dadurch gekennzeichnet, dass** die graphitierte Struktur mit Silizium-Karbid, Silizium-Nitrit oder Tantal-Karbid beschichtet wird.

11. Verfahren nach einem der Ansprüche 1 bis 8, **dadurch gekennzeichnet, dass** die graphitierte 3D-Struktur in Silizium-Karbid oder Tantal-Karbid umgewandelt wird.

12. Verfahren nach einem der Ansprüche 1 bis 8, **dadurch gekennzeichnet, dass** die graphitierte 3D-Struktur mit Pech oder einem Harz imprägniert wird.

13. Verfahren nach einem der Ansprüche 1 bis 12, **dadurch gekennzeichnet, dass** in einem ersten Schritt zunächst eine Stütze oder Stützstruktur (11), bzw. ein Gerüst auf einer geeigneten Unterlage gedruckt und stabilisiert wird und dass diese Stütze dann als Träger, Unterstützung oder Auflage für die im einem zweiten Schritt zu druckende 3D-Struktur (1) verwendet wird.

14. Verfahren nach Anspruch 13, **dadurch gekennzeichnet, dass** nach dem Drucken der Stütze bzw. der Stützstruktur (11) ein Trennmittel auf die Stütze bzw. die Stützstruktur (11) zumindest in den Bereichen aufgetragen werden, die beim nachfolgenden Drucken der 3D-Struktur (1) mit der Stütze bzw. der Stützstruktur (11) in Kontakt kommen.

15. Verfahren nach einem der Ansprüche 1 bis 12, **dadurch gekennzeichnet, dass** die Stütze oder die Stützstruktur (11) und die 3D-Struktur (1) gleichzeitig gedruckt werden.

16. Verfahren nach einem der Ansprüche 1 bis 15, **dadurch gekennzeichnet, dass** als 3D-Struktur (1) ein Tiegel oder Topf (10) und eine Stützstruktur (11) auf der Außenund/oder Innenseite des Tiegels oder Topfes (10) gleichzeitig gedruckt werden und dass die Stützstruktur (11) nach dem Graphitieren der 3D-Struktur (1) mechanisch entfernt wird.

## Claims

1. A method for producing graphitized shaped parts by 3D printing of filaments composed of a plastic, **characterized by**
fusing a filament (7) composed of a fusible and curable plastic and applying it layer by layer with the 3D printer until the desired structure is created,
stabilizing the 3D structure (1) printed from the material of the filament (7) by a temperature treatment to chemically or crystallographically alter the plastic, through
prestabilization at 150°C to ^{~}180°C for a relatively long period, followed
by a stabilization step at ^{~}250°C ± 20°C until the printed 3D structure (1) is sufficiently dimensionally stable, and graphitizing the stabilized 3D structure (8) with or without a supporting structure at a temperature of >1800°C, preferably at >2000°C.

2. The method as claimed in claim 1, **characterized in that** the fusible filament (7) used is an ABS plastic (acrylonitrile-butadiene-styrene copolymer), PVA/BVOH (polyvinyl alcohol) or TPU (thermoplastic polyurethane).

3. The method as claimed in claim 1 or claim 2,
**characterized in that** the 3D structure (1) is heated to the temperature for prestabilization and the temperature for stabilization at a heating ramp of 0.2 - 1.0°C/min in each case.

4. The method as claimed in any of claims 1 to 3,
**characterized in that** the printed 3D structure (1) is stabilized by a support device during prestabilization and stabilization in order to avoid deformation, especially in the case of large parts.

5. The method as claimed in claim 4, **characterized in that** a support device used for the printed 3D structure (1) is a temperature-stable material, such as metal or graphite.

6. The method as claimed in claim 4, **characterized in that** the printed 3D structure (1) is embedded in a temperature-stable powder, for example graphite dust or fine-grained cooking salt.

7. The method as claimed in any of claims 1 to 6,
**characterized in that** graphitization is effected either under reduced pressure or under an inert gas, such as argon, krypton, xenon or nitrogen.

8. The method as claimed in any of claims 1 to 7,
**characterized in that** the furnace atmosphere is supplied with a halogen gas, such as chlorine, while the stabilized 3D structure (8) is being graphitized.

9. The method as claimed in any of claims 1 to 8,
**characterized in that** the graphitized 3D structure (9) is coated with a pyrolytic carbon.

10. The method as claimed in any of claims 1 to 8,
**characterized in that** the graphitized structure is coated with silicon carbide, silicon nitrite or tantalum carbide.

11. The method as claimed in any of claims 1 to 8,
**characterized in that** the graphitized 3D structure is converted into silicon carbide or tantalum carbide.

12. The method as claimed in any of claims 1 to 8,
**characterized in that** the graphitized 3D structure is impregnated with pitch or a resin.

13. The method as claimed in any of claims 1 to 12,
**characterized in that** a support or supporting structure (11), or a scaffold, is first printed and stabilized on a suitable base in a first step and **in that** said support is then used as a carrier, prop or rest for the 3D structure (1) to be printed in a second step.

14. The method as claimed in claim 13, **characterized in that** the printing of the support or supporting structure (11) is followed by applying a release agent to the support or supporting structure (11) at least in the regions that come into contact with the support or supporting structure (11) when the 3D structure (1) is subsequently printed.

15. The method as claimed in any of claims 1 to 12,
**characterized in that** a support or the supporting structure (11) and the 3D structure (1) are printed at the same time.

16. The method as claimed in any of claims 1 to 15,
**characterized in that** simultaneous printing of a crucible or pot (10) as the 3D structure (1) and of a supporting structure (11) on the outside and/or inside of the crucible or pot (10) is carried out and **in that** the supporting structure (11) is mechanically removed after the 3D structure (1) has been graphitized.

## Revendications

1. Procédé de fabrication de pièces moulées graphitisées par impression 3D de filaments composés d'une matière plastique, **caractérisé par**
fondre un filament (7) composé d'une matière plastique fusible et durcissable et l'appliquer couche par couche à l'aide de l'imprimante 3D jusqu'à obtention de la structure souhaitée,
stabiliser la structure 3D (1) imprimée à partir du matériau du filament (7) par un traitement thermique visant à modifier chimiquement ou cristallographiquement le plastique, par
une pré-stabilisation à une température comprise entre 150 °C et 180 °C pendant une période relativement longue, suivie
d'une étape de stabilisation à ^{~}250 °C ± 20 °C jusqu'à ce que la structure 3D imprimée (1) soit suffisamment stable dimensionnellement, et graphiter la structure 3D stabilisée (8) avec ou sans structure de support à une température > 1800 °C, de préférence > 2000 °C.

2. Procédé selon la revendication 1, **caractérisé en ce que** le filament fusible (7) utilisé est un plastique ABS (copolymère d'acrylonitrile-butadiène-styrène), du PVA/BVOH (alcool polyvinylique) ou du TPU (polyuréthane thermoplastique).

3. Procédé selon la revendication 1 ou la revendication 2,
**caractérisé en ce que** la structure 3D (1) est chauffée à la température de pré-stabilisation et à la température de stabilisation selon une rampe de chauffage de 0,2 à 1,0 °C/min dans chaque cas.

4. Procédé selon l'une des revendications 1 à 3, **caractérisé en ce que** la structure 3D imprimée (1) est stabilisée par un dispositif de support pendant la pré-stabilisation et la stabilisation afin d'éviter toute déformation, en particulier dans le cas de pièces de grande taille.

5. Procédé selon la revendication 4, **caractérisé en ce que** le dispositif de support utilisé pour la structure imprimée en 3D (1) est un matériau stable en température, tel que du métal ou du graphite.

6. Procédé selon la revendication 4, **caractérisé en ce que** la structure 3D imprimée (1) est noyée dans une poudre stable en température, par exemple de la poussière de graphite ou du sel de cuisine à grains fins.

7. Procédé selon l'une des revendications 1 à 6, **caractérisé en ce que** la graphitisation est effectuée soit sous pression réduite, soit sous un gaz inerte, tel que l'argon, le krypton, le xénon ou l'azote.

8. Procédé selon l'une des revendications 1 à 7, **caractérisé en ce que** l'atmosphère du four est alimentée en un gaz halogène, tel que le chlore, pendant que la structure 3D stabilisée (8) est graphitisée.

9. Procédé selon l'une des revendications 1 à 8, **caractérisé en ce que** la structure 3D graphitisée (9) est recouverte d'un carbone pyrolytique.

10. Procédé selon l'une des revendications 1 à 8,
**caractérisé en ce que** la structure graphitisée est recouverte de carbure de silicium, de nitrure de silicium ou de carbure de tantale.

11. Procédé selon l'une des revendications 1 à 8,
**caractérisé en ce que** la structure 3D graphitisée est convertie en carbure de silicium ou en carbure de tantale.

12. Procédé selon l'une des revendications 1 à 8,
**caractérisé en ce que** la structure 3D graphitisée est imprégnée de brai ou d'une résine.

13. Procédé selon l'une des revendications 1 à 12,
**caractérisé en ce qu'**un support ou une structure de support (11), ou un échafaudage, est d'abord imprimé et stabilisé sur une base appropriée dans une première étape, et **en ce que** ledit support est ensuite utilisé comme support, étai ou appui pour la structure 3D (1) à imprimer dans une deuxième étape.

14. Procédé selon la revendication 13, **caractérisé en ce que** l'impression du support ou de la structure de support (11) est suivie de l'application d'un agent de démoulage sur le support ou la structure de support (11), au moins dans les zones qui entrent en contact avec le support ou la structure de support (11) lors de l'impression ultérieure de la structure 3D (1).

15. Procédé selon l'une des revendications 1 à 12,
**caractérisé en ce qu'**un support ou la structure de support (11) et la structure 3D (1) sont imprimés en même temps.

16. Procédé selon l'une des revendications 1 à 15,
**caractérisé en ce que** l'impression simultanée d'un creuset ou d'un pot (10) en tant que structure 3D (1) et d'une structure de support (11) à l'extérieur et/ou à l'intérieur du creuset ou du pot (10) est effectuée et **en ce que** la structure de support (11) est retirée mécaniquement après que la structure 3D (1) a été graphitée.
